# EUROPÄISCHE PATENTSCHRIFT

(11) **EP 2 741 357 B1**
(45) Veröffentlichungstag und Bekanntmachung des Hinweises auf die Patenterteilung: **18.11.2015**
(21) Anmeldenummer: 12008155.9
(22) Anmeldetag: 05.12.2012
(51) Int. Cl.: H01M 6/52, H01M 10/54, C22B 7/00, C22B 26/12

(54) **Verfahren zur Wiedergewinnung von Bestandteilen verbrauchter Lithium-Zellen**
Method for the recovery of constituents of spent lithium cells
Procédé de récupération de composants de batteries au lithium usagées

(43) Veröffentlichungstag der Anmeldung: 11.06.2014
(73) Patentinhaber: TSR-KAT GmbH, 75056 Sulzfeld (DE)
(72) Erfinder: Pauling, Hans-Jürgen, Dr., 75038 Oberderdingen (DE)
(74) Vertreter: Schiffer, Axel Martin

(56) Entgegenhaltungen:
- DE-T2- 69 422 842
- DE-T2-602005 001 937
- JP-A- H10 255 861

## Beschreibung

Die Erfindung betrifft ein Verfahren zur Wiedergewinnung von Bestandteilen verbrauchter Lithium-Zellen.

Im Rahmen der Energiewende, insbesondere durch die Einführung von Elektrofahrzeugen, kommen im steigenden Maße Hochenergiebatterien, wie beispielsweise Lithiumakkumulatoren, zum Einsatz.

Ein grundlegendes Problem von Lithiumbatterien liegt darin, dass die darin enthaltenen Lithiumbestandteile bei einem Kontakt mit der umgebenden Atmosphäre, welche Sauerstoff und Feuchtigkeit enthält, spontan brennen oder explodieren können. In der Praxis wird dies durch entsprechende Sicherheitsmaßnahmen weitgehend vermieden und dadurch eine gefahrlose Handhabung mit den Lithium-Zellen ermöglicht. Bei unvorhergesehenen Situationen, wie beispielsweise einem Unfall, können allerdings durch die Zerstörung der Schutzhüllen Sicherheitsprobleme auftreten. So ist es bei herkömmlichen Recyclingverfahren notwendig, die Hüllen vollständig aufzubrechen, wodurch das Risiko für die Entstehung eines Brandes oder eine Explosion erheblich steigt.

Automobilhersteller, welche Lithiumbatterien in ihren Fahrzeugen einsetzen, bauen die Lithiumbatteriesätze, welche nicht mehr die im Fahrzeug benötigte Leistung oder Kapazität aufweisen, aus den Fahrzeugen aus und geben sie für stationäre Anwendungen frei. Da die Sicherheitsanforderungen an stationäre Speicher erheblich niedriger sind als für den mobilen Einsatz, können die Lithiumbatterien, welche aus dem Fahrzeugbetrieb ausscheiden, durchaus noch für den stationären Weiterbetrieb verwendet werden. Die Batterie, welche noch einige Zeit im stationären Einsatz war, muss letztendlich dann doch entsorgt werden.

Ein Verfahren für eine wirtschaftlich sinnvolle Wiederverwertung der Lithiumbatterien existiert noch nicht. Für Lithiumgroßzellen, die in Fahrzeugen oder zur Speicherung regenerativer Energien Verwendung finden, gibt es bislang nur Lösungsansätze, die jedoch nicht befriedigend sind. Somit gibt es für das eigentliche Recycling für Lithiumgroßzellen derzeit keine technische Lösung.

Bekannt ist ferner ein Verfahren, wobei die Lithiumgroßzellen in einen unkritischen Zustand überführt werden, die enthaltenen Stoffe aber nur zu einem geringen Anteil wieder verwertet werden können. Die dabei entstehenden Kosten übersteigen jedoch den Wert des geringen Teils der gewonnenen Stoffe um ein Vielfaches. Bei diesem Verfahren werden die Zellen vollständig einem thermischen Prozess zugeführt, der bei hohen Temperaturen von über 1500°C erfolgt. Bei diesen hohen Temperaturen werden die Lithium-Zellen mit sämtlichen Inhaltsstoffen geschmolzen. Dies betrifft nicht nur die lithiumhaltigen Aktivmaterialien, sondern auch die Nebenbestandteile, wie Separatoren aus Kunststoff, Stromableiter aus Metall, Gehäuseteile aus Metall oder Kunststoff sowie Chemikalien in Form von Elektrolyten und vieles mehr. Diese Komponenten, welche über 80% der Masse der Lithiumgroßzelle bilden, werden durch die gemeinsame thermische Behandlung dem Wiederverwertungskreislauf zum erheblichen Teil entzogen. Zudem wird für diese Erhitzung dieser eigentlich unkritischen Komponenten eine große Menge an Energie benötigt.

Diese genannten Verfahren sind daher unwirtschaftlich und stellen durch die sehr großen eingesetzten Energiemengen eine erhebliche Umweltbelastung dar.

Die EP 0 618 633 B1 beschreibt ein Verfahren und eine Vorrichtung zum Aufbereiten einer Batteriezelle, die eine Elektrolytlösung und eine lithiumhaltige Elektrode enthält, wobei die Elektrolytlösung aus der Zelle abgetrennt, die Elektrode der Zelle einer Atmosphäre ausgesetzt wird, die einen niedrigeren Feuchtigkeitsgehalt aufweist als Umgebungsluft, und die derart behandelte Elektrode mit einer Behandlungsflüssigkeit in Berührung gebracht wird, die mit Lithium reagiert, um auf der Oberfläche der Elektrode ein Reaktionsprodukt abzuscheiden und die entsprechend behandelte Elektrode mit einer Behandlungsflüssigkeit in Berührung gebracht wird, die mit Lithium reagiert, um das Reaktionsprodukt von der Oberfläche zu entfernen.

Die EP 1 733 451 B1 beschreibt ein Verfahren zur hydrometallurgischen Behandlung von Zellen und Batterien, das mindestens eine Anode auf Lithiumbasis, ein in einem Elektrolyten gelöstes Salz und eine Kathode aufweist, die mindestens eine Metall- oder eine Verbindung aus Metallen umfasst, die aus Kobalt, Nickel, Mangan und Eisen ausgewählt sind, um die wiederverwertbaren Fraktionen rückzugewinnen. Bei diesem Verfahren wird eine Trockenzerkleinerung bei Umgebungstemperatur unter inerter Atmosphäre, eine Behandlung durch Magnettrennung und Tischausleser umfasst, gefolgt von einer wässrigen Hydrolyse, um zumindest das Lithium in Form von Carbonat oder Lithiumphosphat, ein Anion des genannten Salzes des Elektrolyten und ein Konzentrat auf Basis mindestens eines Metalls der genannten Kathode rückzugewinnen.

Die JP H10 255861 A offenbart ein Entsorgungsverfahren für Batterien mit hoher Sicherheit und einer geringen Umweltbelastung. Dabei wird eine wieder aufladbare Batterie zerlegt, gereinigt und der elementare Teil der zerlegten Batterie erhitzt. Die aktive Materialschicht des Elektrodenelementes der erhitzten Batterie wird abgezogen und zum Zermahlen abgetrennt. Die pulverisierte aktive Materialschicht wird in eine Säurelösung eingetaucht, um eine säurelösliche Komponente zu eluieren und die Säurelösung wird von einer unlöslichen Komponente abgetrennt. Es handelt sich um ein Entsorgungsverfahren durch Ausfällen und Rückgewinnen einer Metallkomponente in der Säurelösung.

Als eine **Aufgabe** der Erfindung kann angesehen werden, ein Verfahren zur Wiedergewinnung von Bestandteilen verbrauchter Lithium-Zellen bereitzustellen, bei dem die Lithium-Zellen in einen ungefährlichen Zustand überführt werden und das enthaltene Lithium zum erheblichen Teil wiedergewonnen wird, wobei der hierfür benötigte Energieaufwand sehr gering ist.

Diese Aufgabe wird durch ein Verfahren mit den Merkmalen des Anspruchs 1 gelöst.

Vorteilhafte Ausführungsvarianten des Verfahrens sind Gegenstand der Unteransprüche und werden in der folgenden Beschreibung, insbesondere im Zusammenhang mit den Figuren, beschrieben.

Das erfindungsgemäße Verfahren zur Wiedergewinnung von Bestandteilen verbrauchter Lithium-Zellen weist die folgenden Schritte auf: Bereitstellen von ungeschützten Lithium-Zellen, Tiefentladen der ungeschützten Lithium-Zellen, mechanisches Zerkleinern der tiefentladenen Lithium-Zellen in einer sauerstoffarmen Atmosphäre, wobei ein erster Anteil von Lithiumverbindungen abreagiert, Einbringen der zerkleinerten tiefentladenen Lithium-Zellen in eine protische Flüssigkeit, wobei der zweite restliche Anteil von Lithiumverbindungen abreagiert und Wasserstoff gebildet wird, und schließlich der Austrag der abreagierten Lithiumverbindungen.

Als Kerngedanke der Erfindung kann angesehen werden, dass bei dem erfindungsgemäßen Verfahren zur Wiedergewinnung von Bestandteilen verbrauchter Lithium-Zellen herkömmliche Recyclinganlagen für Batterien verwendet werden können, wobei diese jedoch unter Bedingungen betrieben werden, bei denen es nicht zu Brand- oder Explosionsereignissen kommen kann, sondern die Abreaktion der Lithiumverbindungen kontrolliert abläuft.

Bei dem erfindungsgemäßen Verfahren werden zunächst ungeschützte Lithium-Zellen unterschiedlichster Herkunft, beispielsweise aus Fahrzeugen und elektronischen Kleingeräten, bereitgestellt und diese anschließend an eine elektronische Einrichtung angeschlossen, die diese ungeschützten Einzelzellen vollständig tiefentlädt. Ungeschützte Lithium-Zellen sind von elektronischen Komponenten vollständig befreite Lithium-Zellen. Die bei der Tiefentladung frei werdende elektrische Energie kann zum Betrieb von weiteren Stufen der Wiedergewinnungsanlage genutzt werden. Auf diese Weise sinkt der Energiebedarf der Anlage erheblich.

Darüber hinaus werden die Lithium-Zellen durch die Tiefentladung in einen Zustand überführt, welcher zwar für den Normalbetrieb unerwünscht ist, jedoch für das Verfahren der Wiedergewinnung von großem Vorteil ist. Durch die Tiefentladung werden die aktiven Lithiumverbindungen in einen energetisch tiefsten und reaktionsträgsten Zustand versetzt. Zudem wird dabei die Oberfläche der aktiven Lithium enthaltenden Massen passiviert und dadurch die Reaktivität der Lithiumverbindungen weiter gesenkt. Nachfolgend werden die tiefentladenen Lithium-Zellen in einer sauerstoffarmen Atmosphäre mechanisch zerkleinert, um die spezifische Oberfläche zu erhöhen, wobei der in der Atmosphäre enthaltene Sauerstoff kontrolliert mit den oberflächennahen Lithiumverbindungen abreagiert. Die mechanische Zerkleinerung der Lithium-Zellen kann bis zu einer gewünschten Partikelgröße und -form zu beispielsweise einem Granulat oder Pulver erfolgen. Anschließend wird das zerkleinerte tiefentladene lithiumhaltige Material in eine protische Flüssigkeit eingebracht. Hierbei reagieren die restlichen Lithiumverbindungen mit den von der protischen Flüssigkeit abgegebenen Protonen unter Bildung von Lithium-Ionen und gasförmigem Wasserstoff, welcher freigesetzt wird. Der reaktivere Teil der reaktionsfreudigen Lithiumverbindungen hat bereits zuvor während der mechanischen Zerkleinerung abreagiert. In der protischen Flüssigkeit wird nunmehr der überwiegende Teil der gesamten vorhandenen Lithiumverbindungen zur Abreaktion gebracht. Neben Wasserstoff können die lithiumhaltigen Bestandteile in der protischen Flüssigkeit auch zu anderen wasserstoffhaltigen Verbindungen reagieren. Schließlich werden die abreagierten Lithiumverbindungen weitgehend vollständig aus der Anlage ausgetragen. Der Austrag der abreagierten Lithiumverbindungen kann durch verschiedene mechanische oder pneumatische Verfahren, beispielsweise über Bandförderanlagen oder Rohrleitungssysteme, erfolgen. Um ein Austreten der protischen Flüssigkeit und einen Sauerstoffzutritt zu vermeiden, ist eine luftdichte Schleuse für den Austrag vorgesehen.

Insgesamt hat somit das ursprünglich enthaltene aktive lithiumhaltige Material weitgehend abreagiert, so dass die Weiterverarbeitung nun mit herkömmlichen Methoden erfolgen kann. Dabei können auch die vorhandenen Kunststoff- und Metallanteile, die ohne diese Behandlung verlorengegangen wären, wiederverwertet werden. Ferner können die festen Lithiumverbindungen aus dem Verfahrensschritt der mechanischen Zerkleinerung und die löslichen Lithiumverbindungen aus der protischen Flüssigkeit wiedergewonnen werden.

Das dargestellte erfindungsgemäße Verfahren benötigt keine hohen Temperaturen und ist daher sehr energiesparend und kostengünstig. Zudem kann durch die Wiedergewinnung der im lithiumhaltigen Material gespeicherten Energie durch die Tiefentladung und die Nutzung des freigesetzten Wasserstoffs der Energieverbrauch weiter gesenkt werden. Auch stehen die enthaltenen Lithiumverbindungen anschließend dem Stoffkreislauf wieder zur Verfügung. Insgesamt liegen die Betriebskosten des erfindungsgemäßen Verfahrens erheblich unter denen aus dem Stand der Technik bekannten Verfahrens.

In den Lithium-Zellen kann das Lithium üblicherweise in folgenden Verbindungen vorliegen:
Als Material für die negative Elektrode in Form von Graphit mit interkaliertem elementarem Lithium, als nanokristallines, amorphes Silizium mit interkaliertem elementarem Lithium, als Lithium-Titanat Li₄Ti₅O₁₂ oder als Zinndioxid SnO₂.

In der positiven Elektrode als LiCoO₂, LiNiO₂, LiNi₁₋ₓCo_{X}O₂, LiNi_{0,85}Co_{0,1}Al_{0,05}O₂, LiNi_{0,33}Co_{0,33}Mn_{0,33}O₂, LiMn₂O₄, LiMnO₂, LiFePO₄ oder Li₂FePO₄F.

Sowohl in den Elektroden wie im Elektrolyten können die Verbindungen LiSOCl₂, LiSO₂, Li(CF)ₙ, LiI₂, LiFeS₂, LiO₂, LiPF₆ oder Li₃PO₄N verwendet werden.

Es ist vorteilhaft, wenn zum Bereitstellen der ungeschützten Lithium-Zellen elektronische Komponenten aus den Lithium-Zellen entfernt werden.

Hierdurch können die darin enthaltenen Edelmetalle sowie die Seltenerdmetalle unabhängig von dem Lithium separat wiedergewonnen werden. Darüber hinaus können diese Metalle die mechanische und insbesondere chemische Aufbereitung des lithiumhaltigen Materials nicht mehr negativ beeinflussen.

Das erfindungsgemäße Verfahren kann dadurch definiert auf die chemischen Eigenschaften der aktiven Lithiumverbindungen abgestimmt werden und dadurch eine hohe Effizienz erreichen.

Es ist vorteilhaft, wenn das mechanische Zerkleinern mit einem Schredder durchgeführt wird.

Ein Schredder ist eine bewährte und robuste Apparatur, mit welcher der mechanische Zerkleinerungsprozess effizient und rasch erfolgen kann. Ferner kann hiermit die gewünschte zu erhaltende Partikelgröße des lithiumhaltigen Materials definiert eingestellt werden. Darüber hinaus ist ein Schredder verhältnismäßig kostengünstig im Betrieb und kann leicht gewartet werden. Neben einem Schredder können aber natürlich auch andere mechanische Zerkleinerungseinrichtungen, wie Brecher oder Mühlen, verwendet werden.

Geeigneterweise weist die sauerstoffarme Atmosphäre einen Sauerstoffgehalt von maximal 10 Vol.-% auf.

Bei einem größeren Sauerstoffgehalt ist die Reaktionsgeschwindigkeit der Oxidation der Lithiumverbindungen zu hoch und es erfolgt eine zu starke Wärmeentwicklung, so dass die Abreaktion der Lithiumverbindungen schwer zu kontrollieren ist. Ferner sollte der Sauerstoffgehalt zumindest einen Wert von 1 Vol.-% aufweisen, um eine ausreichende Reaktionsgeschwindigkeit zu gewährleisten.

Es ist bevorzugt, wenn der Sauerstoffgehalt der sauerstoffarmen Atmosphäre kontrolliert wird.

Dies ist insofern wichtig, da die verschiedenen Bauarten von Lithium-Zellen unterschiedliche Reaktionsfähigkeiten aufweisen können. Daher sollte die zum Betrieb des Verfahrens verwendete Anlage so eingestellt werden, dass die Abreaktion der aktiven Lithiumverbindungen nach diesen Erfordernissen eingestellt wird. Dies ist entscheidend, da bei zu geringen Reaktionsgeschwindigkeiten, das heißt einer zu niedrigen Sauerstoffkonzentration, das lithiumhaltige Material noch zu reaktionsfähig aus der Anlage austritt, während bei einer zu hohen Reaktionsgeschwindigkeit, also einer zu hohen Sauerstoffkonzentration, die Temperatur in der Anlage zu stark ansteigen kann.

Bei dem erfindungsgemäßen Verfahren wird die sauerstoffarme Atmosphäre mittels einer Sauerstoffpumpe erzeugt.

Insbesondere hierfür geeignet ist eine Sauerstoffpumpe, wie sie in dem deutschen Patent DE 103 54 219 B4 beschrieben ist. Hierdurch kann durch einen elektrisch selektiven Transport Sauerstoff aus dem Inneren der Verfahrensanlage nach außen transportiert werden. Die in dem genannten Patent beschriebene Sauerstoffpumpe zeichnet sich durch einen sehr kostengünstigen Betrieb und einen einfachen und zuverlässigen Aufbau aus.

Die Sauerstoffpumpe kann in beide Richtungen betrieben werden. Dies erfolgt durch einen Wechsel der Polarität der an die Elektroden angelegten Spannung und durch die Umkehrung der Richtung der elektrochemischen Reaktion. Strukturell ist die Sauerstoffpumpe derart ausgebildet, dass sie als Gasdiffusionselektrode zumindest einen gasdurchlässigen Bereich, einen Katalysatorbereich und einen flüssigkeitsdurchlässigen Bereich aufweist, wobei die Elektrode als Gasdiffusionsmembran mit einer Schichtstruktur ausgebildet ist. Auch können bei besonderen Ausführungsformen der Gasdiffusionselektrode der Katalysatorbereich und der flüssigkeitsdurchlässige Bereich integral, insbesondere in einer Schicht, ausgebildet sein. Die Sauerstoffpumpe weist daher einen einfachen prinzipiellen Aufbau auf und besitzt keine beweglichen Teile, so dass sie keinem mechanischen Verschleiß unterworfen ist. Ferner können Wirkungsgrade von über 75% im praktischen Betrieb erreicht werden. Dies senkt nicht nur die Betriebskosten, sondern ist auch vorteilhaft für die Umweltbilanz und die gesamte CO₂-Emission. Weil die Sauerstoffpumpe auch keine beweglichen Teile aufweist, tritt im Betrieb kaum eine Geräuschbelästigung auf.

Es ist erfindungsgemäß, wenn die Sauerstoffpumpe zumindest teilweise durch die aus der Tiefentladung gewonnenen Energie betrieben wird.

Da die Sauerstoffpumpe mit Gleichspannung betrieben wird, kann die Energie aus der Tiefentladung der Lithium-Zellen, die ebenfalls in Form von Gleichspannung entsteht, optimal genutzt werden. Weiterhin kann über den Strom zu den Sauerstoffpumpen deren Fördergeschwindigkeit geregelt werden und somit die Sauerstoffkonzentration im Inneren des Gehäuses. Insgesamt wird durch die Verwendung der aus der Tiefentladung gewonnenen Energie für den Betrieb der Sauerstoffpumpen die Gesamtenergiebilanz des Verfahrens verbessert.

Es ist vorteilhaft, wenn als protische Flüssigkeit Wasser, Alkohole, Amine, Amide, Carbonsäuren, Mineralsäuren oder ein Gemisch davon verwendet wird.

Diese Flüssigkeiten verfügen über acide über ein elektronegatives Atom gebundene Wasserstoffatome, welche abgespalten werden können und durch Aufnahme eines Elektrons in elementaren gasförmigen Wasserstoff überführt werden. Um die Reaktionsgeschwindigkeit der Abreaktion der aktiven Lithiumverbindungen zu steuern und zu heftige Reaktionen zu vermeiden, ist eine Auswahl der passenden protischen Flüssigkeit mit einer geeigneten Reaktivität notwendig. Bei einer hohen Reaktivität des vorhandenen lithiumhaltigen Materials ist es zweckmäßig, ein entsprechend weniger reaktives protisches Lösungsmittel, wie beispielsweise Alkohole, zu verwenden, während bei einem weniger reaktiven Anteil der Lithiumverbindungen die Verwendung von reaktionsfreudigeren Säuren besser geeignet ist. Um die Reaktivität noch optimaler an das lithiumhaltige Material anzupassen, ist ferner die Verwendung von Gemischen, beispielsweise durch Verdünnen mit schwächeren protischen Lösungsmitteln, eine weitere Möglichkeit, die Reaktivität zu variieren.

Es ist zweckmäßig, wenn das Einbringen der zerkleinerten Lithium-Zellen in die protische Flüssigkeit in einer sauerstoffarmen Atmosphäre erfolgt.

Durch Diffusionsprozesse kann der Sauerstoff aus der Umgebungsatmosphäre durch die protische Flüssigkeit hindurch zu dem lithiumhaltigen Material diffundieren und dort unerwünschte Oxidationsprozesse hervorrufen. Ferner besteht die Gefahr von spontanen Entzündungen des Sauerstoffs mit dem gebildeten Wasserstoff in einer Knallgasreaktion. Wie auch in der vorhergehenden Stufe der mechanischen Zerkleinerung kann die Sauerstoffatmosphäre durch Sauerstoffpumpen auf einem niedrigen Niveau gehalten werden. Um die Gefahr von Entzündungsreaktionen und Nebenoxidationsprozessen zu unterbinden, ist ein Sauerstoffgehalt von unter 5 Vol.-% anzustreben. Im optimalen Fall liegt der Sauerstoffgehalt bei 0 Vol.-%. Um diesen niedrigen Sauerstoffgehalt zu erreichen, ist jedoch ein relativ hoher Energieaufwand erforderlich. Der Sauerstoffgehalt in der Umgebungsatmosphäre kann durch Messsonden simultan gemessen werden, um gegebenenfalls die Sauerstoffpumpen nur zeitweise in Betrieb zu setzen.

Es ist vorteilhaft, wenn die zerkleinerten tiefentladenen Lithium-Zellen innerhalb der protischen Flüssigkeit transportiert werden.

Auf diese Weise erfolgt bei der Abreaktion der aktiven Lithiumverbindungen in der protischen Flüssigkeit eine Durchmischung des flüssigen Mediums, so dass ständig frische Volumenelemente der protischen Flüssigkeit an die Oberfläche des lithiumhaltigen Materials antransportiert werden. Zugleich wird auf eine effiziente Weise die bei der Reaktion entstehende Wärme abtransportiert, so dass lokale Überhitzungen vermieden werden.

Besonders bevorzugt werden die zerkleinerten tiefentladenen Lithium-Zellen innerhalb der protischen Flüssigkeit im Gegenstrom transportiert.

Hierbei trifft das neu zugeführte lithiumhaltige Material zunächst auf eine bereits weitgehend abreagierte protische Flüssigkeit und reagiert daher langsamer. Zum Ende der Transportstrecke trifft hingegen das weitgehend abreagierte lithiumhaltige Material auf noch unverbrauchte protische Flüssigkeit, was zu einer vollständigeren Reaktion führt. Mit der Strömungsgeschwindigkeit der protischen Flüssigkeit kann daher ein Optimum an Reaktionsfähigkeit zu Umsatz eingestellt werden. Zudem dient die protische Flüssigkeit auch dem Abtransport der erzeugten Wärme.

Es ist zweckmäßig, wenn der Volumenstrom der protischen Flüssigkeit gesteuert wird. Ferner ist es vorteilhaft, wenn auch die Temperatur der protischen Flüssigkeit gesteuert wird.

Dadurch kann der Abtransport der erzeugten Reaktionswärme definiert auf die gewünschte Reaktionsgeschwindigkeit der aktiven Lithiumverbindungen mit der protischen Flüssigkeit eingestellt werden. Die Temperatur der protischen Flüssigkeit dient entweder zur Unterstützung oder zur Hemmung der Reaktion. Weil es sich um eine exotherme Reaktion handelt, wird das Gleichgewicht bei tieferen Temperaturen auf die Seite der Produkte verschoben, während es im umgekehrten Fall auf die Seite der Edukte verschoben wird.

Es ist vorteilhaft, wenn der durch die Reaktion des zweiten Anteils von Lithiumverbindungen gebildete Wasserstoff zur Energieerzeugung verwendet wird.

Die Energieerzeugung kann beispielsweise in Form einer Brennstoffzelle oder über eine Wärmekraftmaschine erfolgen. Die daraus erhaltene Energie kann in die energieverbrauchenden Verfahrensschritte der mechanischen Zerkleinerung der tiefentladenen Lithium-Zellen sowie dem Transportieren der Lithium-Zellen in der protischen Flüssigkeit verwendet werden und dadurch die Gesamtenergiebilanz des Verfahrens verbessern.

Weitere Eigenschaften und Vorteile des erfindungsgemäßen Verfahrens werden nachstehend unter Bezugnahme auf die beigefügten schematischen Figuren beschrieben. Darin zeigt:
Fig. 1: eine vereinfachte schematische Ansicht des erfindungsgemäßen Verfahrens;
Fig. 2: eine schematische Darstellung einer komplexeren Ausgestaltung des erfindungsgemäßen Verfahrens.

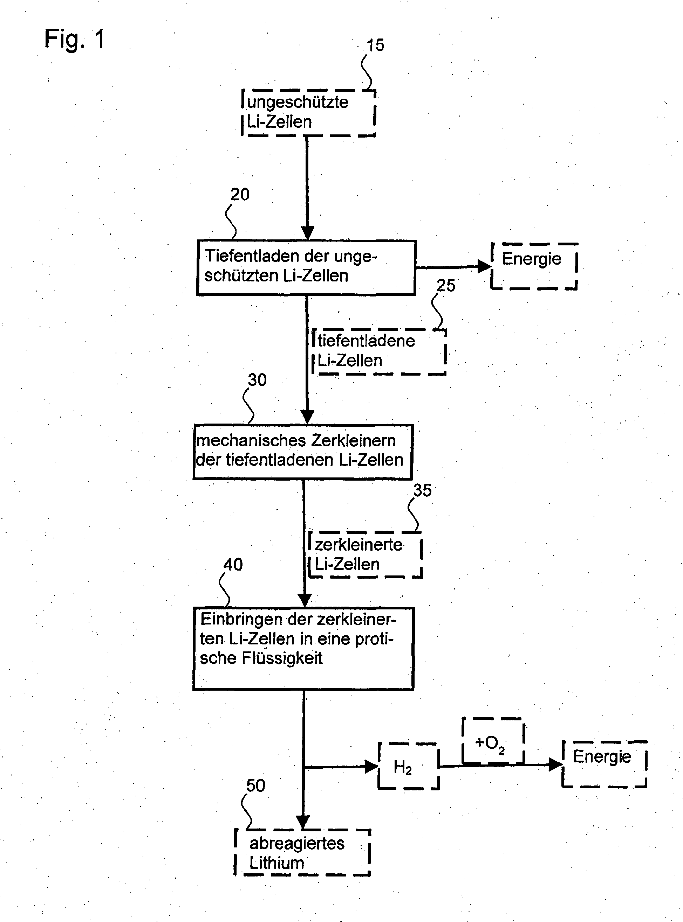

Ein Beispiel einer einfachen Ausführungsform des erfindungsgemäßen Verfahrens ist in Fig. 1 schematisch dargestellt. Hierbei werden zunächst ungeschützte Lithium-Zellen 15 bereitgestellt und an eine elektrische Vorrichtung zum Tiefentladen 20 der Zellen angeschlossen, wobei elektrische Energie in Form von Gleichstrom erhalten wird. Die tiefentladenen Lithium-Zellen 25 werden über eine luftdichte Schleuse in eine luftdichte Kammer mit einer Sauerstoffkonzentration von unter 10 Vol.-% überführt. In dieser luftdichten Kammer befindet sich ein Schredder, welcher die mechanische Zerkleinerung 30 der tiefentladenen Lithium-Zellen durchführt, wobei ein Granulat von Lithiummaterial erhalten wird.

Die in Granulatform vorliegenden zerkleinerten Lithium-Zellen 35 werden in einem weiteren Schritt 40 über eine weitere luftdichte Schleuse in einen abgedichteten Behälter eingebracht, in dem sich eine protische Flüssigkeit, wie beispielsweise Wasser, befindet. Oberhalb des Flüssigkeitsspiegels der protischen Flüssigkeit beträgt der Sauerstoffgehalt der Atmosphäre weniger als 10 Vol.-%. In der protischen Flüssigkeit reagiert der zweite Anteil der Lithiumverbindungen mit dem Wasser zu gasförmigem Wasserstoff, welcher entweicht, und Lithiumhydroxid, welches in der wässrigen Lösung verbleibt. Der entweichende Wasserstoff wird aufgefangen und in einer Brennstoffzelle durch Reaktion mit Sauerstoff zur Energieerzeugung verwendet. Als Endprodukt werden weitgehend vollständig abreagierte Lithiumverbindungen 50 erhalten, welche wieder in den Produktionskreislauf zur Herstellung neuer Produkte verwendet werden können.

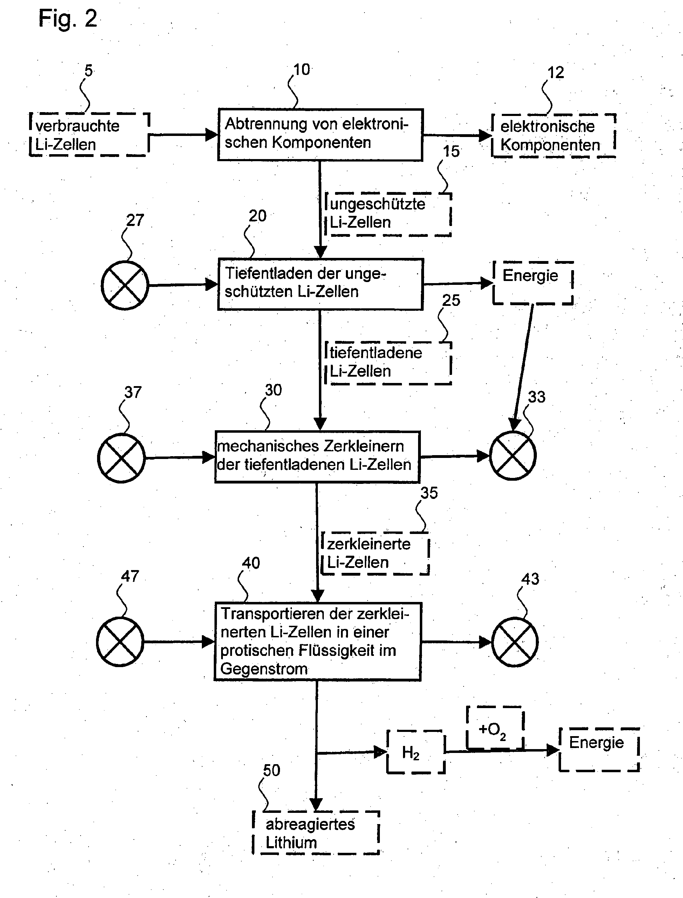

Ein Beispiel für eine komplexere Ausgestaltung des erfindungsgemäßen Verfahrens ist in Fig. 2 schematisch dargestellt.

Verbrauchte Lithium-Zellen 5, welche aus elektronischen Gebrauchsgeräten stammen können, werden in dem Verfahrensschritt der Abtrennung 10 von den elektronischen Komponenten 12 befreit. Diese elektronischen Komponenten 12, welche hochwertige Edelmetalle enthalten können, werden in einen separaten Wiederverwertungskreislauf überführt. Nach der Abtrennung der elektronischen Komponenten 12 von den verbrauchten Lithium-Zellen 5 werden ungeschützte Lithium-Zellen 15 erhalten.

Diese ungeschützten Lithium-Zellen 15 werden in dem Verfahrensschritt der Tiefentladung 20 in den energetisch tiefsten Zustand versetzt, welcher gleichzeitig der reaktionsträgste Zustand ist. Die Tiefentladung 20 der ungeschützten Lithium-Zellen 15 erfolgt durch Anschluss an eine elektrische Vorrichtung, welche die elektrische Energie in Form von Gleichstrom aufnimmt. Abhängig vom Zustand der Lithium-Zellen 15 werden die Dauer und das Ausmaß der Tiefentladung 20 über eine Steuereinrichtung 27 gesteuert.

Die erhaltenen tiefentladenen Lithium-Zellen 25 werden über eine luftdichte Schleuse in eine hermetisch abgedichtete Kammer überführt, in der die mechanische Zerkleinerung 30 der tiefentladenen Lithium-Zellen 25 erfolgt. Die mechanische Zerkleinerung 30 wird mit Hilfe eines Schredders durchgeführt. In der abgedichteten Kammer wird ein Sauerstoffgehalt von unter 10 Vol.-% über eine Steuereinrichtung 37 eingestellt. Zur Aufrechterhaltung des niedrigen Sauerstoffgehalts dient eine Sauerstoffpumpe 33, welche durch die aus der Tiefentladung 20 gewonnenen elektrischen Energie mit Strom versorgt wird.

Die erhaltenen zerkleinerten Lithium-Zellen 35 werden durch eine weitere luftdichte Schleuse in einen Behälter überführt, welcher eine protische Flüssigkeit enthält. In diesem Behälter werden die zerkleinerten Lithium-Zellen 35 auf einem Förderband im Gegenstrom zu der protischen Flüssigkeit transportiert. Durch den Transport 40 im Gegenstrom trifft neu zugeführtes lithiumhaltiges Material zunächst auf weitgehend abreagierte protische Flüssigkeit und reagiert daher langsamer. Am Ende der Transportstrecke trifft das weitgehend abreagierte lithiumhaltige Material auf noch unverbrauchte protische Flüssigkeit, was zu einer vollständigeren Reaktion führt.

In der oberhalb der protischen Flüssigkeit befindlichen Atmosphäre liegt ein Sauerstoffgehalt von weniger als 10 Vol.-% vor. Der niedrige Sauerstoffgehalt wird durch eine Sauerstoffpumpe 43 bewirkt. Der Sauerstoffgehalt in der Atmosphäre sowie die Temperatur und die Strömungsgeschwindigkeit der protischen Flüssigkeit wird in Abhängigkeit vom Reaktionsverlauf mittels einer Steuereinrichtung 47 geregelt. Aus der Reaktion der Lithiumverbindungen mit der protischen Flüssigkeit erhält man gasförmigen Wasserstoff, der in einer kontrollierten Oxidation mit Sauerstoff, beispielsweise in einer Brennstoffzelle oder in einer Verbrennungsmaschine, zur Energiegewinnung genutzt wird.

Die weitgehend vollständig abreagierten Lithiumverbindungen 50 liegen in der protischen Flüssigkeit in Form von Lithium-Ionen vor und können anschließend zu verwertbaren Verbindungen regeneriert werden.

Mit dem erfindungsgemäßen Verfahren können herkömmliche Recyclinganlagen für Lithium-Zellen unter Bedingungen betrieben werden, bei dem die Lithiumverbindungen kontrolliert abreagieren und das Brand- oder Explosionsrisiko gering ist. Ferner wird der noch vorhandene Energiegehalt der Lithium-Zellen effizient zum Betrieb des Verfahrens genutzt; welches daher eine sehr positive Energiebilanz aufweist. Insgesamt wird ein umweltschonendes, sicheres, wirtschaftliches und energiesparendes Verfahren zur Wiedergewinnung von Bestandteilen verbrauchter Lithium-Zellen bereitgestellt.

## Patentansprüche

1. Verfahren zur Wiedergewinnung von Bestandteilen verbrauchter Lithium-Zellen (5) mit den Schritten:
- Bereitstellen (10) von ungeschützten Lithium-Zellen (15);
- Tiefentladen (20) der ungeschützten Lithium-Zellen (15);
- mechanisches Zerkleinern (30) der tiefentladenen Lithium-Zellen (25) in einer sauerstoffarmen Atmosphäre, wobei ein erster Anteil von Lithiumverbindungen abreagiert;
- Einbringen (40) der zerkleinerten tiefentladenen Lithium-Zellen (35) in eine protische Flüssigkeit, wobei der zweite restliche Anteil von Lithiumverbindungen abreagiert und Wasserstoff gebildet wird;
- Austrag der abreagierten Lithiumverbindungen (50), charakterisiert dadurch, dass die sauerstoffarme Atmosphäre mittels einer Sauerstoffpumpe (33) erzeugt wird, und
- die Sauerstoffpumpe (33) zumindest teilweise durch die aus der Tiefentladung (20) gewonnenen Energie betrieben wird.

2. Verfahren nach Anspruch 1,
**dadurch gekennzeichnet,**
**dass** zum Bereitstellen (10) der ungeschützten Lithium-Zellen (15) elektronische Komponenten (12) aus den Lithium-Zellen (5) entfernt werden.

3. Verfahren nach Anspruch 1 oder 2,
**dadurch gekennzeichnet,**
**dass** das mechanische Zerkleinern (30) mit einem Schredder durchgeführt wird.

4. Verfahren nach einem der Ansprüche 1 bis 3,
**dadurch gekennzeichnet,**
**dass** die sauerstoffarme Atmosphäre einen Sauerstoffgehalt von maximal 10 Vol.-% aufweist.

5. Verfahren nach einem der Ansprüche 1 bis 4,
**dadurch gekennzeichnet,**
**dass** der Sauerstoffgehalt der sauerstoffarmen Atmosphäre kontrolliert wird.

6. Verfahren nach einem der Ansprüche 1 bis 5,
**dadurch gekennzeichnet,**
**dass** als protische Flüssigkeit Wasser, Alkohole, Amine, Amide, Carbonsäuren, Mineralsäuren oder ein Gemisch davon verwendet wird.

7. Verfahren nach einem der Ansprüche 1 bis 6,
**dadurch gekennzeichnet,**
**dass** das Einbringen (40) der zerkleinerten tiefentladenen Lithium-Zellen (35) in die protische Flüssigkeit in einer sauerstoffarmen Atmosphäre erfolgt.

8. Verfahren nach einem der Ansprüche 1 bis 7,
**dadurch gekennzeichnet,**
**dass** die zerkleinerten tiefentladenen Lithium-Zellen (35) innerhalb der protischen Flüssigkeit transportiert werden.

9. Verfahren nach Anspruch 8,
**dadurch gekennzeichnet,**
**dass** die zerkleinerten tiefentladenen Lithium-Zellen (35) innerhalb der protischen Flüssigkeit im Gegenstrom transportiert werden.

10. Verfahren nach einem der Ansprüche 1 bis 9,
**dadurch gekennzeichnet,**
**dass** der Volumenstrom der protischen Flüssigkeit gesteuert wird.

11. Verfahren nach einem der Ansprüche 1 bis 10,
**dadurch gekennzeichnet,**
**dass** die Temperatur der protischen Flüssigkeit gesteuert wird.

12. Verfahren nach einem der Ansprüche 1 bis 11,
**dadurch gekennzeichnet,**
**dass** der durch die Reaktion des zweiten Anteils von Lithiumverbindungen gebildete Wasserstoff zur Energieerzeugung verwendet wird.

## Claims

1. Method for the recovery of constituents of spent lithium cells (5), with the steps:
- prepare (10) unprotected lithium cells (15);
- deep discharge (20) the unprotected lithium cells (15);
- mechanically comminute (30) the deep discharged lithium cells (25) in a low-oxygen atmosphere, wherein a first portion of lithium compounds reacts;
- incorporate (40) the comminuted deep discharged lithium cells (35) into a protic liquid, wherein the second, remaining portion of lithium compounds reacts and hydrogen is formed;
- remove the reacted lithium compounds (50),
**characterised in that**
the low-oxygen atmosphere is produced by means of an oxygen pump (33), and the oxygen pump (33) is operated at least in part by the energy obtained from the deep discharging (20).

2. Method according to claim 1,
**characterised in that**
to prepare (10) the unprotected lithium cells (15), electronic components (12) are removed from the lithium cells (5).

3. Method according to claim 1 or 2,
**characterised in that**
the mechanical comminution (30) is carried out with a shredder.

4. Method according to one of claims 1 to 3,
**characterised in that**
the low-oxygen atmosphere has an oxygen content of maximum 10% vol.

5. Method according to one of claims 1 to 4,
**characterised in that**
the oxygen content of the low-oxygen atmosphere is controlled.

6. Method according to one of claims 1 to 5,
**characterised in that**
water, alcohols, amines, amides, carbonic acids, mineral acids or a mixture thereof are used as protic liquid.

7. Method according to one of claims 1 to 6,
**characterised in that**
the incorporation (40) of the comminuted deep discharged lithium cells (35) into the protic liquid is realised in a low-oxygen atmosphere.

8. Method according to one of claims 1 to 7,
**characterised in that**
the comminuted deep discharged lithium cells (35) are transported within the protic liquid.

9. Method according to claim 8,
**characterised in that**
the comminuted deep discharged lithium cells (35) are transported within the protic liquid in counter flow.

10. Method according to one of claims 1 to 9,
**characterised in that**
the volume flow of the protic liquid is controlled.

11. Method according to one of claims 1 to 10,
**characterised in that**
the temperature of the protic liquid is controlled.

12. Method according to one of claims 1 to 11,
**characterised in that**
the hydrogen formed by the reaction of the second portion of lithium compounds is used to produce energy.

## Revendications

1. Procédé de récupération de composants de batteries au lithium usagées (5) comprenant les étapes suivantes :
- fourniture (10) de batteries au lithium non protégées (15) ;
- décharge profonde (20) des batteries au lithium non protégées (15) ;
- broyage mécanique (30) des batteries au lithium profondément déchargées (25) dans une atmosphère pauvre en oxygène, une première part de composés lithium réagissant ;
- introduction (40) des batteries au lithium profondément déchargées broyées (35) dans un liquide protique, la deuxième part restante des composés lithium réagissant et de l'hydrogène étant formé ;
- sortie des composés lithium ayant réagi (50),
**caractérisé en ce que**
- l'atmosphère pauvre en oxygène est générée à l'aide d'une pompe à oxygène (33), et
- la pompe à oxygène (33) est actionnée au moins partiellement par l'énergie acquise par la décharge profonde (20).

2. Procédé selon la revendication 1,
**caractérisé en ce**
**que** des composants électroniques (12) sont retirés des batteries au lithium (5) en vue de la fourniture (10) des batteries au lithium non protégées (15).

3. Procédé selon la revendication 1 ou 2,
**caractérisé en ce que**
le broyage mécanique (30) est réalisé avec un déchiqueteur.

4. Procédé selon l'une des revendications 1 à 3,
**caractérisé en ce que**
l'atmosphère pauvre en oxygène comprend une teneur en oxygène de 10 % vol maximum.

5. Procédé selon l'une des revendications 1 à 4,
**caractérisé en ce que**
la teneur en oxygène de l'atmosphère pauvre en oxygène est contrôlée.

6. Procédé selon l'une des revendications 1 à 5,
**caractérisé en ce que**
sont utilisés comme liquide protique de l'eau, des alcools, des amines, des amides, des acides carboxyliques, des acides minéraux ou un mélange de ceux-ci.

7. Procédé selon l'une des revendications 1 à 6,
**caractérisé en ce que**
l'introduction (40) des batteries au lithium profondément déchargées broyées (35) dans le liquide protique a lieu dans une atmosphère pauvre en oxygène.

8. Procédé selon l'une des revendications 1 à 7,
**caractérisé en ce que**
les batteries au lithium profondément déchargées broyées (35) sont transportées à l'intérieur du liquide protique.

9. Procédé selon la revendication 8,
**caractérisé en ce que**
les batteries au lithium profondément déchargées broyées (35) sont transportées à l'intérieur du liquide protique à contre-courant.

10. Procédé selon l'une des revendications 1 à 9,
**caractérisé en ce que**
le débit du liquide protique est commandé.

11. Procédé selon l'une des revendications 1 à 10,
**caractérisé en ce que**
la température du liquide protique est commandée.

12. Procédé selon l'une des revendications 1 à 11,
**caractérisé en ce que**
l'hydrogène formé par la réaction de la deuxième part des composés lithium est utilisé pour produire de l'énergie.
